(19) Europäisches Patentamt
European Patent Office
Office européen des brevets

(11) **EP 0 577 000 B1**

(12) **EUROPEAN PATENT SPECIFICATION**

(45) Date of publication and mention
of the grant of the patent:
**02.09.1998   Bulletin 1998/36**

(51) Int Cl.⁶: **H04L 9/30**, G06F 7/72

(21) Application number: **93110068.9**

(22) Date of filing: **24.06.1993**

(54) **Method for performing public-key cryptography**

Verfahren zur Ausführung einer Geheimübertragung mit öffentlichem Schlüssel

Procédé cryptographique à clé publique

(84) Designated Contracting States:
**DE ES FR GB IT**

(30) Priority:  **29.06.1992   EP 92401838**

(43) Date of publication of application:
**05.01.1994   Bulletin 1994/01**

(73) Proprietor: **THOMSON multimedia
92648 Boulogne Cédex (FR)**

(72) Inventor: **Naccache, David
F-94700 Maisons-Alfort (FR)**

(74) Representative:
**Hartnack, Wolfgang, Dipl.-Ing. et al
Deutsche Thomson-Brandt GmbH
Licensing & Intellectual Property,
Göttinger Chaussee 76
30453 Hannover (DE)**

(56) References cited:
• COMPUTERS & SECURITY. INTERNATIONAL
JOURNAL DEVOTED TO THE STUDY OF
TECHNICAL AND FINANCIAL ASPECTS OF
COMPUTER SECURITY vol. 10, no. 3, May 1991,
AMSTERDAM NL pages 263 - 267 D.
LAURICHESSE ET AL. 'OPTIMIZED
IMPLEMENTATION OF RSA CRYPTOSYSTEM'

**Description**

The present invention relates to a method for performing public-key cryptography, e.g. in pay TV systems.

Background

The RSA algorithm (Rivest, Shamir, Adelman, "A method for obtaining digital signatures and public-key cryptosystems", Communications of the ACM, Vol 21, No 2, pp 120-126, 1978) is a known public-key method and block cipher. The algorithm is based on the assumed difficulty of factoring large composite numbers using digital computation means. The cipher keys are mathematically derived using two large prime numbers p and q. The prime numbers must meet the following properties to ensure adequate security of the algorithm:

1.
p and q must be at least 512 bit long;
2.
The length of p and q should differ by a few digits;
3.
The Greatest Common Divisor (GCD) of (p-1) and (q-1) should be small;
4.
Both, (p-1) and (q-1) should have large prime factors;
5.
p = af + 1 and q = bg + 1, where f and g are large prime numbers and a and b are small prime numbers;
6.
Choose f and g such that f = hw + 1 and g = jv + 1, where w and v are large prime numbers.

A large secret key SK is chosen such that the GCD with SK and the product of the primes, each minus one, is one:

$$GCD\ (SK,\ (p-1)(q-1)) = 1.$$

((p-1)(q-1) is known as the Euler Phi function of p and q)

A public key PK is then derived by finding a number that is a multiplicative inverse of PK modulo the Euler Phi Function:

$$PK*SK = 1\ mod\ (p-1)(q-1).$$

The ciphering function first breaks the data into blocks of 2 or more characters $M_1,...M_t$ and assigns integer values $C_i$ to each block. Next the block is raised to the power of a cipher key (PK) and has the modulus taken with respect to $p*q = n$.

Thus, encrypting can be expressed as:

$$C_i = (M_i)^{PK}\ mod\ n \qquad for\ i=1\ to\ t;$$

and decrypting as:

$$M_i = (C_i)^{SK}\ mod\ n \qquad for\ i=1\ to\ t.$$

The predominant computational task in performing the RSA is the modular exponentiation, that is, given X, b and n, compute $Y = X^b\ mod\ n$. The most classical method for doing so is the so-called Square-and-Multiply algorithm. Denoting by b[i] the $i^{th}$ bit of b (with b[0] as LSB) the algorithm is the following:

```
Square-and-Multiply(X, b, n)
        {
                VAR1 = X
                VAR2 = 1
                while (b is not equal to zero)
                    {
                        VAR1 = VAR1 * VAR1 mod n
                        if (b[0] == 1) then
                            {
                                VAR2 = VAR2 * VAR1 mod n
                                b = b-1
                            }
                        b = b/2
                    }
                return (VAR2)
        }
```

It can be easily proved that Square-and-Multiply(X, b, n) = Y as defined above.

There exist some modular multiplication methods (e.g. Montgomery, "Modular Multiplication without Trial Division", Mathematics of Computation, Vol 44, pp 519-521) that compute the product A*B*I mod n, where A and B are the two numbers to multiply and I is a constant parasite factor depending on n.

The behaviour of such a computional resource is therefore:

$$ModMul(A, B, n) = A*B*I \text{ mod } n.$$

Obviously, with a couple of multiplications, one might get rid of the parasite factor I. Namely, this is done by:

$$ModMul(1/I^2, ModMul(A, B, n), n) =$$

$$ModMul(1/I^2, A*B*I, n) = A*B*I*(1/I^2)*I = A*B \text{ mod } n$$

But this double multiplication has two disadvantages:

- It takes the double of the time requested by ModMul.
- One have to store somewhere the precalculated value $1/I^2$ mod n.

Invention

It is one object of the invention to disclose a method to speed up the computation time and to avoid an additional storing of a value like $1/I^2$ mod n. This object is reached by the method disclosed in claim 1.

The RSA improvement is done by modifying the definition of the Ciphertexts in such a way that their computation will be much quicker by using Montgomery-like multiplication resources. Similarly, Diffie-Hellman keys (described in: Diffie and Hellman, "New directions in Cryptography", IEEE Transactions on Information Theory, Vol IT-22, pp. 644-654, 1976) can be computed in an analogously different way.

The two disadvantages mentioned above are overcome by modifying the Square-and-Multiply computation routine in the following way:

```
NewExp(X, b, n)
      {
              VAR1 = X
              VAR2 = 1
              while (b is not equal to zero)
                    {
                          VAR1 = ModMul(VAR1 ,VAR1, n)
                          if (b[0] == 1) then
                                {
                                      VAR2 = ModMul (VAR1, VAR2, n)
                                      b = b - 1
                                }
                          b = b/2
                    }
              return (VAR2)
      }
```

It can be easily shown that the mathematical behavior of NewExp is:

$$\text{NewExp } (X, b, n) = X^b I^{b-1} \text{ mod } n.$$

In the inventive cryptosystem keys are computed as in the RSA but the enciphering of a message M is done by:

$$\text{NewExp}(M, PK, n) = M^{PK} I^{PK-1} \text{ mod } n = C$$

and deciphering is done by:

$$\text{NewExp}(C, SK, n) = M$$

The deciphering is correct since:

$$\text{NewExp}(C, SK, n) = C^{SK} I^{SK-1} \text{ mod } n =$$

$$(M^{PK} I^{PK-1})^{SK} I^{SK-1} \text{ mod } n = M^{PK*SK} I^{SK(PK-1)} =$$

$$(M I^{PK*SK})/I = M I/I = M.$$

The proposed new method is as secure as the original RSA method, since the operations done for encrypting a message are exactly the same as encrypting by an original RSA the message MI (which yields(MI)$^{PK}$ mod n) and then dividing (modulo n) the so-obtained ciphertext by I (which I is a public value whatsoever).

In principle the inventive method is suited for performing public-key cryptography comprising a sender device SEN and a receiver device REC having:

- RAM means and/or non volatile memory means;

- an RSA composite modulus $n = p*q$ recorded in said non-volatile memory means, where p and q are large prime numbers;
- independent computation and communication capabilities;
- a public key PK recorded in the memory means of SEN;
- a secret key SK recorded in the memory means of REC;
- PK and SK computed according to RSA,

whereby:

- SEN enciphers a message M by computing

$$C = M^{PK} I^{PK+z-1} \bmod n;$$

- REC deciphers the ciphertext C by computing

$$M = C^{SK} I^{SK+z-1} \bmod n;$$

- I is a constant depending on n;
- z is a solution of the equation $z(SK+1) = 0 \bmod (p-1)(q-1)$.

Advantageous additional embodiments of the inventive method are resulting from the respective dependent claims.

It is a further object of the invention to improve the method of Diffie and Hellman. This object is reached by the method disclosed in the respective further independent claim.

In principle this inventive method is suited for secure key exchange between a first and a second device, wherein a prime modulus p and an exponentiation base A are decided beforehand and a first hardware or software computational resource NewExp(X, b, n) is used, whereby:

- for all X, b and n:

$$NewExp(X, b, n) = X^b I^{b+z-1} \bmod n \text{ with } z = 0;$$

- said first device selects a first random number y and computes the value

$$v = A^y I^{y-1} \bmod p = NewExp(A, y, p);$$

- said second device selects a second random number x and computes the value

$$w = A^x I^{x-1} \bmod p = NewExp(A, x, p);$$

- said first device sends v to said second device and said second device sends w to said first device;
- said first device computes

$$K = NewExp(w, y, p) = A^{xy} I^{xy-1} \bmod p;$$

- said second device computes

$$K = NewExp(v, x, p) = A^{xy} I^{xy-1} \bmod p.$$

Advantageous additional embodiments of the inventive method are resulting from the respective dependent claims.

<u>Preferred embodiments</u>

It is also possible to modify the NewExp procedure in order to integrate already a starting value for VAR2. In such a case, one may compute in advance the starting value of VAR2 in such a way that the RSA will still work (i.e. NewExp (NewExp(M, PK, n) n),SK, n) = M).

Advantageous starting values for VAR2 are certain powers of I, say $VAR2 = I^z$ mod n :

```
NewExp(X, b, n)
        {
                VAR1 = X
                VAR2 = I^Z mod n
                while (b is not equal to zero)
                        {
                                VAR1 = ModMul(VAR1 ,VAR1, n)
                                if (b[0] == 1) then
                                        {
                                                VAR2 = ModMul (VAR1, VAR2, n)
                                                b = b - 1
                                        }
                                b = b/2
                        }
                return (VAR2)
        }
```

Since for all M one should have the relation:

$$M = (M^{PK} I^{PK+z-1})^{SK} I^{SK+z-1} = M^{PK*SK} I^{PK*SK+z*SK-SK+SK+z-1}$$

$$= M I^{z*SK+z} = M I^{z(SK+1)} \text{ mod n,}$$

the following is required:

$$0 = z(SK+1) \text{ mod } (p-1)(q-1).$$

A trivial solution of this equation is $z = 0$ (i.e. the original NewExp algorithm) but one may chose as well another solution for z.

For instance, if $p = SK = PK = 3$ and $q = 5$, then $z = 2$ is a possible value that yields correct RSA operations since $z(SK+1)$ mod $(p-1)(q-1) = 2(3+1)$ mod $2*4 = 8$ mod $8 = 0$.

Diffie and Hellman proposed a well-known key distribution scheme mentioned above, which is based on the discrete logarithm problem. In their original scheme, both sides decide about a common constant A and a prime number p. Then the first user chooses a random number x, computes $A^x$ mod $p = w$ and sends this value to the second user. The second user chooses a random number y, computes $v = A^y$ mod p and sends this value to the first user. Both users recover the same secret key $K = A^{x*y}$ mod p by computing:

<u>First user:</u>

$$v^x = (A^y)^x \bmod p = K$$

Second user:

$$w^y = (A^x)^y \bmod p = K$$

The inventive method can also be used for computing the common key K. This computation is based on the NewExp procedure described above:

The first user chooses a random number x, computes $w = NewExp(A, x, p) = A^x \, I^{x-1} \bmod p$ and sends this value to the second user. The second user chooses a random number y, computes $v = NewEx\text{-}p(A, y, p) = A^y \, I^{y-1} \bmod p$ and sends this value to the first user.

Both users recover the same secret key $K = A^{x*y} \, I^{x*y-1} \bmod p$ by computing :

First user:

$$K = NewExp(v, x, p) = v^x \, I^{x-1} \bmod p = (A^y \, I^{y-1})^x \, I^{x-1} \bmod p$$

$$= A^{x*y} \, I^{x*y-1} \bmod p.$$

Second user:

$$K = NewExp(w, y, p) = w^y \, I^{y-1} \bmod p = (A^x \, I^{x-1})^y \, I^{y-1} \bmod p$$

$$= A^{x*y} \, 1^{x*y-1} \bmod p.$$

The invention can be used in public-key cryptosystems, e.g. in a pay TV system, which comprise a sender device SEN (e.g. a verifier in a pay TV decoder) and a receiver device REC (e.g. a smart card), both having RAM means and non volatile memory means (eg. ROM, EPROM or EEPROM) containing recorded therein an RSA composite modulus n, and computation means and communication interface means (e.g. a smart card reader) between devices SEN and REC.

Only 60% of the computation time for the known methods is necessary for the inventive method. Advantageously simple types of microprocessors can be used.

## Claims

1. Method for performing public-key cryptography between a sender device SEN and a receiver device REC having:

   - RAM means and/or non volatile memory means;
   - an RSA composite modulus $n = p*q$ recorded in said memory means, where p and q are large prime numbers;
   - independent computation and communication capabilities;
   - a public key PK recorded in the memory means of SEN;
   - a secret key SK recorded in the memory means of REC;
   - PK and SK computed according to RSA,

   **characterized in** that:

   - SEN enciphers a message M by computing

   $$C = M^{PK} \, I^{PK+z-1} \bmod n;$$

   - REC deciphers the ciphertext C by computing

$$M = C^{SK} \, l^{SK+z-1} \bmod n;$$

- l is a constant depending on n;
- z is a solution of the equation

$$z(SK+1) = 0 \bmod (p-1)(q-1).$$

2. Method according to claim 1, **characterized in** that for computing C and M a first hardware or software computational resource NewExp(X, b, n) is used, whereby:

- for all X, b and n:

$$NewExp(X, b, n) = X^b \, l^{b+z-1} \bmod n;$$

- C is computed by C = NewExp(M, PK, n);
- M is recovered from C by M = NewExp(C, SK, n).

3. Method according to claim 1 or 2, **characterized in** that z = 0.

4. Method for secure key exchange between a first and a second device, wherein a prime modulus p and an exponentiation base A are decided beforehand, **characterized in** that a first hardware or software computational resource NewExp(X, b, n) is used, whereby:

- for all X, b and n:

$$NewExp(X, b, n) = X^b \, l^{b+z-1} \bmod n \text{ with } z = 0;$$

- said first device selects a first random number y and computes the value

$$v = A^y \, l^{y-1} \bmod p = NewExp(A, y, p);$$

- said second device selects a second random number x and computes the value

$$w = A^x \, l^{x-1} \bmod p = NewExp(A, x, p);$$

- said first device sends v to said second device and said second device sends w to said first device;
- said first device computes

$$K = NewExp(w, y, p) = A^{xy} \, l^{xy-1} \bmod p;$$

- said second device computes

$$K = NewExp(v, x, p) = A^{xy} \, l^{xy-1} \bmod p.$$

5. Method according to any of claims 2 to 4, **characterized in** that said first computational resource NewExp(,,) is a square-and-multiply exponentiation function

- where modular multiplications were replaced by a second computational resource ModMul(A, B, n) = A*B*l mod n;
- the accumulator variable of the square-and-multiply exponentiation function was pre-initialized with the value

$I^z \bmod n.$

6. Method according to any of claims 2 to 5, **characterized in** that said first computational resource works according to the following algorithm:

- set a first variable in said RAM means to VAR1 = X;
- set a second variable in said RAM means to VAR2 = $I^z \bmod n$;
- while (b is not equal to zero)

```
        {
             set VAR1 = ModMul(VAR1, VAR1, n)
             if (b[0] == 1) then
                  {
                       set VAR2 = ModMul(VAR1, VAR2, n)
                       b = b - 1
                  }
             b = b/2
        }
```

return VAR2 as a final result.

7. Method according to claims 5 or 6, **characterized in** that said second computational resource works according to the Montgomery algorithm for modular multiplication.

8. Method according to any of claims 4 to 7, **characterized in** that said modulus n and/or said prime number p and/ or said exponentiation base A are about 512 bits long.

**Patentansprüche**

1. Verfahren zur Durchführung einer Verschlüsselung mit öffentlichem Schlüssel zwischen einer Sendervorrichtung SEN und einer Empfängervorrichtung REC umfassend:

- RAM-Mittel und/oder nicht flüchtige Speichermittel;
- einen zusammengesetzten RSA-Modulus n = p*q, der in den Speichermitteln aufgezeichnet ist, wobei p und q große Primzahlen sind;
- unabhängige Rechen- und Übertragungsmöglichkeiten;
- einen öffentlichen Schlüssel PK, der in den Speichermitteln von SEN aufgezeichnet ist;
- einen geheimen Schlüssel, der in den Speichermitteln von REC aufgezeichnet ist;
- PK und SK berechnet gemäß RSA;

    dadurch gekennzeichnet, daß:

- SEN eine Nachricht M durch Berechnung von

$$C = M^{PK} I^{PK+z-1} \bmod n \text{ chiffriert;}$$

- REC den Chiffriertext C durch Berechnung von

$$M = C^{SK} I^{SK+z-1} \bmod n \text{ dechiffriert;}$$

- l eine von n abhängige Konstante ist
- z eine Lösung der Gleichung

$$z(SK+1) = 0 \bmod (p-1)(q-1)$$

ist.

2. Verfahren nach Anspruch 1, <u>dadurch gekennzeichnet,</u> daß zur Berechnung von C und M ein erstes Hardware- oder Software-Rechenhilfsmittel NewExp (X, b, n) verwendet wird, wobei:

- für alle X, b und n:

$$NewExp\ (X, b, n) = X^b\ l^{b+z-1}\ \bmod n;$$

- C berechnet wird durch C = NewExp (M, PK, n):
- M wiedergewonnen wird aus C durch M = NewExp (C SK, n).

3. Verfahren nach Anspruch 1 oder 2, <u>dadurch gekennzeichnet,</u> daß z = 0.

4. Verfahren für einen sicheren Schlüsselaustausch zwischen einer ersten und einer zweiten Vorrichtung, bei dem ein Prim-Modulus p und eine Exponentiationsbasis A im voraus bestimmt werden, <u>dadurch gekennzeichnet,</u> daß ein erstes Hardware- oder Software-Rechenhilfsmittel NewExp (X, b, n) verwendet wird, wobei:

- für alle X, b und n:

$$NewExp\ (X, b, n) = X^b\ l^{b+z-1}\ \bmod n\ mit\ z = 0$$

- die erste Vorrichtung eine erste willkürliche Zahl y wählt und den Wert berechnet

$$v = A^y\ l^{y-1}\ \bmod p = NewExp\ (A, y, p);$$

- die zweite Vorrichtung eine zweite willkürliche Zahl x wählt und den Wert berechnet:

$$w = A^x\ l^{x-1}\ \bmod p = NewWxp\ (A, x, p);$$

- die erste Vorrichtung v an die zweite Vorrichtung sendet und
- die zweite Vorrichtung w an die erste Vorrichtung sendet;

$$K = NewExp\ (w, y, p) = A^{xy}\ l^{y-1}\ \bmod p;$$

- die zweite Vorrichtung berechnet:

$$K = NewExp\ (v, x, p) = A^{xy}\ l^{xy-1}\ \bmod p.$$

5. Verfahren nach einem der Ansprüche 2 bis 4, <u>dadurch gekennzeichnet,</u> daß die ersten Rechenhilfsmittel NewEsp (,,) eine Quadrierungs- und Multiplizierungs-Exponentialfunktion sind,

- wobei modulare Multiplikationen durch ein zweites Rechenhilfsmittel ModMul (A, B, n) = A*B*l mod n ersetzt werden;
- der mit der Quadrierungs- und Multiplizierungs-Exponentiationsfunktion veränderbare Akkumulator mit dem Wert $l^z$ mod n vor-initialisiert wurde.

**6.** Verfahren nach einem der Ansprüche 2 bis 5, <u>dadurch gekennzeichnet,</u> daß das erste Rechenhilfsmittel nach dem folgenden Algorithmus arbeitet:

- setze eine erste Variable in den RAM-Mitteln auf VAR1 = X;
- setze eine zweite Variable in den RAM-Mitteln auf VAR2 = $I^z$ mod n;
- wobei (b nicht gleich null ist)

```
        {
                setze VAR1 = ModMul (VAR1, VAR1, n)
                wenn (b[0] == 1) dann
                        {
                                setze VAR2 = ModMul (VAR1, VAR2, n)
                                b = b - 1
                        }
                b = b/2
        }
```

kehre zu VAR2 als endgültiges Ergebnis zurück.

**7.** Verfahren nach Anspruch 5 oder 6, <u>dadurch gekennzeichnet,</u> daß das zweite Rechenhilfsmittel nach dem Montgonery-Algorithmus für modulare Multiplikation arbeitet.

**8.** Verfahren nach einem der Ansprüche 4 bis 7, <u>dadurch gekennzeichnet,</u> daß der Modulus n und/oder die Primzahl p und/oder die Exponentiationsbasis A etwa 512 Bits lang sind.

**Revendications**

**1.** Méthode de réalisation d'une cryptographie à clé publique entre un dispositif émetteur EM et un dispositif récepteur REC ayant :

- un dispositif de mémoire dynamique et/ou de mémoire non volatile ;
- un modulo composite RSA n = p*q sauvegardé dans ladite mémoire non volatile, où p et q sont de grands nombres premiers ;
- des dispositifs de calcul et de communication indépendants ;
- une clé publique PK enregistrée dans le dispositif de mémoire de EM ;
- une clé secrète enregistrée dans le dispositif de mémoire de REC ;
- PK et SK sont calculés à l'aide de l'algorithme RSA,

   **caractérisée par le fait que :**

- EM crypte le message M en effectuant le calcul :

$$C = M^{PK} I^{PK+z-1} \bmod n ;$$

- REC décrypte le texte crypté C en effectuant le calcul

$$M = C^{SK} I^{SK+z-1} \bmod n ;$$

- l est une constante dépendant de n ;
- z est une solution de l'équation

$$z \, (SK+1) = 0 \bmod (p-1)(q-1).$$

2. Méthode selon la revendication 1, **caractérisée par le fait que** l'on utilise pour le calcul de C et de M une ressource de calcul matérielle ou logicielle NewExp (X, b, n), où

- pour tous les X, b, n :

$$NewExp \, (X, b, n) \, X^b l^{b+z-1} \bmod n \, ;$$

- C est calculé par C = NewExp (M, PK, n) ;
- M est récupéré à partir de C par M = NewExp (C, SK, n).

3. Méthode selon les revendications 1 ou 2, **caractérisée par le fait que** $z = 0$.

4. Méthode sûre d'échange de clé entre un premier dispositif et un second dispositif, où un modulo premier n et une base d'exponentiation A ont fait l'objet d'un accord préalable, **caractérisée par le fait** qu'une première ressource de calcul matérielle ou logicielle NewExp(X, b, n) est utilisée, où :

- pour tous les X, b, n :

$$NewExp(X, b, n) = X^b l^{b+z-1} \bmod n \text{ avec } z = 0 \, ;$$

- ledit premier dispositif choisit au hasard un premier nombre y et calcule la valeur

$$v = A^y l^{y-1} \bmod p = NewExp \, (A, y, p) \, ;$$

- ledit second dispositif choisit au hasard un second nombre x et calcule la valeur

$$w = A^x l^{x-1} \bmod p = NewExp \, (A, x, p) \, ;$$

- ledit premier dispositif envoie v audit second dispositif et ledit second dispositif envoie w audit premier dispositif ;
- ledit premier dispositif calcule :

$$K = NewExp \, (w, y, p) = A^{xy} l^{xy-1} \bmod p \, ;$$

- ledit second dispositif calcule :

$$K = NewExp \, (v, x, p) = A^{xy} l^{xy-1} \bmod p.$$

5. Méthode conforme à l'une des revendications 2 à 4, **caractérisée par le fait que** ladite première ressource de calcul NewExp (,,) est une fonction d'exponentiation par élévation au carré et multiplication

- où la multiplication modulaire est remplacée par une seconde ressource de calcul ModMul (A, B, n) = A*B*l mod n ;
- la variable d'accumulateur de la fonction d'exponentiation par élévation au carré et multiplication a été initialisée préalablement à la valeur $l^z \bmod n$.

6. Méthode conforme à l'une des revendications 2 à 5,
**caractérisée par le fait que** ladite première ressource de calcul fonctionne conformément à l'algorithme suivant :

- initialiser une première variable dans ledit dispositif de mémoire dynamique à VAR1 = X ;
- initialiser une seconde variable dans ledit dispositif de mémoire dynamique à VAR2 = $I^z$ mod n ;
- tant que (b n'est par égal à 0)

```
        {
            faire VAR1 = ModMul (VAR1, VAR1, n)
            si (b[0] == 1) alors
                {
                    faire VAR2 = ModMul (VAR1, VAR2, n)
                    b = b - 1
                }
            b = b/2
        }
```

retournant VAR2 comme résultat final.

7. Méthode selon les revendications 5 ou 6, **caractérisée par le fait que** ladite seconde ressource de calcul fonctionne conformément à l'algorithme de Montgomery pour la multiplication modulaire.

8. Méthode selon l'une quelconque des revendications 4 à 7, **caractérisée par le fait que** ledit modulo n et/ou le dit nombre premier p et/ou ladite base d'exponentiation A sont d'une longueur d'environ 512 bits.